# EUROPEAN PATENT SPECIFICATION

(11) **EP 0 918 681 B1**
(45) Date of publication and mention of the grant of the patent: **17.04.2002**
(21) Application number: 97936909.7
(22) Date of filing: 28.08.1997
(51) Int. Cl.: B62D 24/00, B62D 31/02, B60G 7/00

(54) **REACTION STRUT BRACKET FOR A VEHICLE**
KONSOLE FÜR EINE STREBE AN EINEM FAHRZEUG
SUPPORT DE JAMBE DE REACTION DESTINE A UN VEHICULE

(30) Priority: 30.08.1996 SE 9603141
(43) Date of publication of application: 02.06.1999
(73) Proprietor: Scania CV Aktiebolag (publ), 151 87 Södertälje (SE)
(72) Inventor: BERGSTRÖM, Lars, S-633 69 Eskilstuna (SE); JUNG, Lars, S-641 36 Katrineholm (SE)
(74) Representative: Waldebäck, Hans Olov
(86) International application number: SE9701422
(87) International publication number: WO9808729

(56) References cited:
- CH-A- 302 351
- DE-A- 1 755 811

## Description

The invention relates to a reaction strut bracket for a vehicle in accordance with the preamble to patent claim 1.

### State of the art

Bus manufacture usually involves as a first stage the manufacture of a chassis and as a second stage the mounting of a vehicle body on that chassis. It is also usual for the chassis and the vehicle body to be made by different manufacturers. The chassis manufacturer makes a number of different standard chassis and the body builder purchases the most suitable chassis on which to mount the particular type of vehicle body. Although this manufacturing process has long been developed, mounting a vehicle body on a chassis involves various special operations. For example, it is usual that the chassis manufacturer makes a front section and a rear section (each provided with frame side members) and that the body builder makes a vehicle body with self-supporting structure between these two sections. A problem which arises in this respect is that of fastening the vehicle body to the chassis. Various forms of struts and inserts are usually required for fastening the vehicle body to the chassis frame side numbers. This involves operations on the chassis to create additional fastening holes in the frame side members, a region where there is a shortage of space. There is a consequent risk of having to position brackets at unsuitable points from the force absorption point of view and also a risk that further fastening holes might weaken the frame side members.

It is usual to weld such struts directly to the flanges of the vehicle's side members, but as these flanges are relatively weak the fastening cannot absorb any large forces.

Particularly for the fastening of the vehicle body to the rear chassis section there is a problem in that the strut which fastens the vehicle body to the chassis has to extend across an area which it is also desired to use as luggage space. It is of course desirable to be able to provide as large luggage space as possible, with as few struts as possible penetrating it.

A generally known practice in vehicle and bus construction is the use of reaction struts to absorb forces from the vehicle's wheel suspension, and such reaction strut brackets are examples of components which have to be positioned at points on the frame side members which are suitable from the force distribution point of view, as shown in document DE 1755 811 A that shows the features of the preamble of claim 1.

### Objects of the invention

The invention is intended to eliminate the abovementioned disadvantages. Its object is therefore to make it possible for the vehicle body to be fastened to the chassis in a manner and at points which are advantageous from the force absorption point of view. One aspect of this is that the fastening of the vehicle body should not weaken the chassis or the chassis frame side members. A further aspect is that the fastening should not result in the vehicle's luggage space being limited by penetrating struts or the like.

### Brief description of the invention

In order to achieve the abovementioned objects, the invention is distinguished by the features indicated in the characterising part of patent claim 1.

The fundamental idea of the invention is that at least two of the reaction strut brackets fastened to the chassis are provided with fastening surfaces to which it is possible to fasten the vehicle body. This means that in fastening the vehicle body to the chassis the body builder will not have to make any fastening of his own to the frame side members. As the reaction strut brackets will have already been fastened to the frame side members in the course of chassis manufacture, the vehicle body mounting process will involve no further operations on the frame side members. The frame side members will thus not be subject to weakening by the creation of further fastening holes or the like. It is primarily the reaction strut brackets situated in the vicinity of the vehicle's rear axle which have to be used in this respect, since this is the most critical area from the space point of view, but other reaction strut brackets may of course also be used.

The design of the fastening surfaces of the reaction strut brackets may for example consist of a simple surface to which it is possible to fasten the vehicle body by welded connections, but other designs are of course possible with regard to both the design of the fastening surfaces and the fastening connections.

One purpose of reaction struts is to transmit the forces which arise from the wheel suspension to the vehicle body with a view to their being absorbed by the latter. The solution according to the invention makes it possible for the forces arising from the wheel suspension to be transmitted via the reaction struts and the reaction strut brackets directly to the vehicle body without following unnecessarily circuitous paths.

The fundamental idea of the invention is thus to provide a reaction strut bracket such that it can also be used for fastening the body to the vehicle's frame and frame side members.

Other features distinguishing the invention are indicated in the description below of an embodiment with reference to the attached drawings.

### List of drawings

- Fig. 1: shows a side view of a rear section of a chassis with a reaction strut bracket on a frame side member,
- Fig. 2: shows a rear view of the chassis according to Fig. 1, and
- Fig. 3: shows a perspective view of the front section of the chassis according to Figs. 1 and 2 and sections of a vehicle body fastened thereto.

### Description of an embodiment

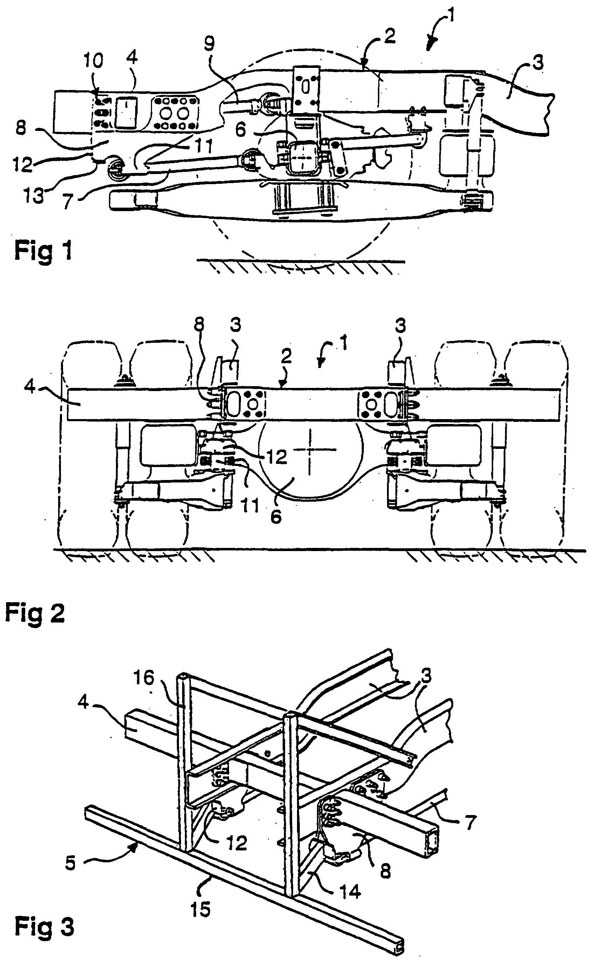

Fig. 1 shows a side view of a chassis 1 for a vehicle which in this example takes the form of a bus. The details depicted include a rear section 2 of the chassis 1 which also includes an undepicted front section which, like the rear section 2, incorporates a frame with frame side members 3 and a number of cross-members 4. To the front section and the rear section 2 is fastened a vehicle body 5 which connects the rear section 2 to the front section so as together to form a whole bus. Sections of the vehicle body 5 are only depicted in Fig. 3. The vehicle body 5 is constructed as an integrated self-supporting unit which has no conventional frame.

In the region of the bus's rear axle 6 and rear wheels the longitudinal frame side members 3 are bent upwards to provide space for the rear axle 6 and its wheel suspension. The rear axle 6 is air-sprung, so the bus's wheel suspension incorporates air bellows of inherently conventional design which are therefore not described in more detail.

An advantageous characteristic of air springs is that they provide good possibilities of damping out vertical oscillation movements between the wheels and the chassis. A disadvantage of air suspension is that the air bellows cannot locate the axle 6 in the horizontal plane relative to the chassis 1 and the vehicle frame. It is therefore necessary to use instead a number of reaction struts 7,9 whose function is to locate the axle 6 relative to the frame. The reaction struts 7,9 consist of a number of substantially straight bars which each have one of their ends fastened to the axle 6 and the other end fastened to the reaction strut bracket. This embodiment incorporates two upper reaction struts 9 which are fastened to the inside of the frame side members 3 via inner reaction strut brackets provided for the purpose which extend obliquely forwards from the middle of the axle 6 and outwards towards the frame side members 3. The latter do not form part of the invention described in this embodiment and are therefore not further described. This embodiment also incorporates two lower reaction struts 7 which extend from the axle 6 substantially straight forwards in the longitudinal direction of the vehicle towards outer reaction strut brackets 8 on the outsides of the frame side members.

Each of the lower reaction brackets 8 consists of two plates welded together which have their lower ends bent outwards. These plates extend substantially vertically in the longitudinal direction of the vehicle. Between these plates and beneath the respective frame side member 3 is fastened a bearing in the form of a bearing sleeve 11 to which the respective lower reaction strut 7 is bearingly fastened. The reaction strut brackets 8 are in their turn fastened by bolted connections 10 to the frame on the outside of the frame side beams 3. As relatively large forces are required for positioning the axle in all operating situations, it is important that the reaction strut brackets 8 are situated at points which can absorb large forces. It is also essential that the reaction strut brackets 8 are properly fastened to the frame side members 3 by a sufficient number of bolted connections 10.

Each of the reaction strut brackets 8 depicted in the drawings is fastened by twelve bolted connections 10 to the frame side member 3. This means that the reaction strut brackets 8 are fastened to the frame forward of the vehicle's rear axle 6. In the region of each reaction strut bracket 8 the frame is provided with a cross-member 4 to stiffen the frame in the transverse direction. The bolted connections 10 for each reaction strut bracket comprise six forward and six rearward of the cross-member 4.

In addition, each reaction strut bracket 8 is provided with a fastening surface which in this embodiment consists of a vertical surface 12 facing forwards and a lower horizontal surface 13 facing downwards which together form a continuous fastening surface. This surface is arranged beneath the frame side member 3. In practice this fastening surface may take the form of an angle-iron which runs across the vehicle and is welded firmly to the lower forward angle of the two plates which form the respective reaction strut bracket 8. Similar reaction strut brackets 8 are arranged on both frame side members 3, but as these are symmetrically alike, only one of the reaction strut brackets 8 is described,

The fastening surface 12,13 is intended for fastening the vehicle body 5 to the chassis rear section 2. A strut 14 is fastened by welding to this fastening surface 12,13 to connect the vehicle body 5 to the frame side member 3. This strut 14 extends obliquely downwards and forwards and transmits forces between the vehicle body 5 and the chassis 1. The strut 14 is fastened both to the vertical side surface 12 and to the horizontal surface 13. The ideal from the force absorption point of view would have been for the strut 14 to extend entirely horizontally, parallel with the reaction strut 7, because vehicle braking results in relatively large braking forces having to be transmitted in substantially the longitudinal direction of the vehicle. Having this strut 14 nevertheless extending somewhat obliquely downwards is a compromise solution to make it possible to have a large luggage space in the area between the front and rear axles of the vehicle. This design does make it possible, however, for there to be no need for any struts in the area occupied by the luggage space. The vehicle body strut 14 is connected to a cross-member 15 to which an undepicted luggage compartment floor in the vehicle body is fastened. The depicted cross-member 15 also has fastened to it a vertical element 16 which in turn is also firmly welded to a forward end of the web of the frame side member 3. The strut 14, the element 16 and the cross-member 15 form part of the otherwise undepicted structural frame of the vehicle body 5.

The design of the fastening of the vehicle body 5 to the front section of the chassis 1 may in principle be analogous to what is described above for the fastening to the chassis rear section 2, but the positioning of the strut for the forward fastening of the vehicle body is not as critical, which makes it possible to use a fastening of known design, further description of which is not material to the present invention.

## Claims

1. Reaction strut bracket for a wheeled vehicle with a chassis which is provided with a frame and is intended to be connected to a self-supporting vehicle body, whereby the reaction strut bracket (8) is fastened to the vehicle frame (3) and is connected via struts (7,9) to the vehicle's wheel suspension in order to position a vehicle axle (6) andlor to absorb reaction forces from the wheel suspension, **characterised in that** the reaction strut bracket (8) is provided with a fastening surface (12,13) via which the vehicle body (5) is intended to be fastened to the vehicle frame (3).

2. Reaction strut bracket according to patent claim 1, **characterised in that** the fastening surface (13) faces downwards and has a horizontal extent.

3. Reaction strut bracket according to patent claim 1, **characterised in that** the fastening surface (12) faces in the forward direction of the vehicle and has a vertical extent.

4. Reaction strut bracket according to patent claim 1, **characterised in that** the fastening surface (12,13) takes the form of an angle-iron fastened to the reaction strut bracket (8) and that the angle-iron extends in the transverse direction of the vehicle.

5. Reaction strut bracket according to patent claim 4 whereby the reaction strut bracket (8) incorporates two plates with extent substantially vertical and in the longitudinal direction of the vehicle, **characterised in that** the angle-iron is fastened to the forward lower angle portions of the respective plates, which are thus held together by the angle-iron.

6. Reaction strut bracket according to any one of patent claims 1-5, **characterised in that** the fastening surface (12,13) is situated beneath a longitudinal frame side member (3) which forms part of the frame and to which the reaction strut bracket (8) is fastened.

7. Reaction strut bracket according to any one of patent claims 1-5 whereby the reaction strut bracket (8) supports a bearing (11) for a reaction strut (7) directed forwards from an air-sprung rear axle (6), **characterised in that** both the bearing (11) and the fastening surface (12,13) are situated beneath a longitudinal frame side member (3) which forms part of the frame and to which the reaction strut bracket (8) is fastened.

## Patentansprüche

1. Reaktionsstrebenstütze für ein Radfahrzeug mit einem Fahrgestell, das mit einem Rahmen versehen ist und dazu bestimmt ist, mit einer selbsttragenden Fahrzeugkarosserie verbunden zu werden, wobei die Reaktionsstrebenstütze (8) am Fahrzeugrahmen (3) befestigt ist und über Streben (7, 9) mit der Radaufhängung des Fahrzeugs verbunden ist, um eine Fahrzeugachse (6) zu positionieren und/oder Reaktionskräfte von der Radaufhängung aufzunehmen, **dadurch gekennzeichnet, dass** die Reaktionsstrebenstütze (8) mit einer Befestigungsfläche (12, 13) versehen ist, über welche die Fahrzeugkarosserie (5) sich am Fahrzeugrahmen (3) befestigen lässt.

2. Reaktionsstrebenstütze nach Patentanspruch 1, **dadurch gekennzeichnet, dass** die Befestigungsfläche (13) nach unten gerichtet ist und eine waagerechte Erstreckung hat.

3. Reaktionsstrebenstütze nach Patentanspruch 1, **dadurch gekennzeichnet, dass** die Befestigungsfläche (12) in Vorwärtsrichtung des Fahrzeugs gerichtet ist und eine senkrechte Erstreckung hat.

4. Reaktionsstrebenstütze nach Patentanspruch 1, **dadurch gekennzeichnet, dass** die Befestigungsfläche (12, 13) von einem Winkelprofil gebildet ist, das an der Reaktionsstrebenstütze (8) befestigt ist, und dass das Winkelprofil sich in Querrichtung des Fahrzeugs erstreckt.

5. Reaktionsstrebenstütze nach Patentanspruch 4, wobei die Reaktionsstrebenstütze (8) zwei Platten mit im wesentlichen senkrechter Erstreckung in Längsrichtung des Fahrzeugs aufweist, **dadurch gekennzeichnet, dass** das Winkelprofil an den vorderen unteren Winkelabschnitten der jeweiligen Platten befestigt ist, die somit durch das Winkelprofil zusammengehalten sind.

6. Reaktionsstrebenstütze nach einem der Patentansprüche 1-5, **dadurch gekennzeichnet, dass** die Befestigungsfläche (12, 13) unterhalb eines längsgerichteten Rahmenseitenteils (3) angeordnet ist, welches Bestandteil des Rahmens ist, und an dem die Reaktionsstrebenstütze (8) befestigt ist.

7. Reaktionsstrebenstütze nach einem der Patentansprüche 1-5, wobei die Reaktionsstrebenstütze (8) ein Lager (11) für eine Reaktionsstrebe (7) trägt, die von einer luftgefederten Hinterachse (6) nach vorne gerichtet ist, **dadurch gekennzeichnet, dass** sowohl das Lager (11) wie die Befestigungsfläche (12, 13) unterhalb eines längsgerichteten Rahmenseitenteils (3) angeordnet sind, welches ein Teil des Rahmens ist und an dem die Reaktionsstrebenstütze (8) befestigt ist.

## Revendications

1. Support de bielle de réaction pour un véhicule à roues comportant un châssis qui est pourvu d'un cadre de châssis et est destiné à être relié à une carrosserie autoportante de véhicule, le support de bielle de réaction (8) étant fixé au cadre de châssis (3) du véhicule et étant relié, par l'intermédiaire de bielles (7, 9), à la suspension de roue du véhicule, afin de positionner un essieu (6) du véhicule et/ou d'absorber des forces de réaction développées par la suspension de roue, **caractérisé en ce que** le support de bielle de réaction (8) est pourvu d'une surface de fixation (12, 13) par l'intermédiaire de laquelle la carrosserie (5) du véhicule est destinée à être fixée au cadre de châssis (3) du véhicule.

2. Support de bielle de réaction selon la revendication 1, **caractérisé en ce que** la surface de fixation (13) est tournée vers 1e bas et présente un plan d'extension horizontal.

3. Support de bielle de réaction selon la revendication 1, **caractérisé en ce que** la surface de fixation (12) est tournée dans la direction de marche avant du véhicule et présente un plan d'extension vertical.

4. Support de bielle de réaction selon la revendication 1, **caractérisé en ce que** la surface de fixation (12, 13) prend la forme d'une ferrure angulaire, fixée au support de bielle de réaction (8), et **en ce que** la ferrure angulaire s'étend dans la direction transversale du véhicule.

5. Support de bielle de réaction selon la revendication 4, le support de bielle de réaction (8) comportant deux plaques qui s'étendent de façon sensiblement verticale et dans la direction longitudinale du véhicule, **caractérisé en ce que** la ferrure angulaire est fixée aux parties angulaires inférieures avant des plaques respectives, lesquelles sont ainsi tenues ensemble par la ferrure angulaire.

6. Support de bielle de réaction selon l'une quelconque des revendications 1 à 5, **caractérisé en ce que** la surface de fixation (12, 13) est située en dessous d'un élément latéral longitudinal de cadre de châssis (3), qui fait partie du cadre de châssis et auquel le support de bielle de réaction (8) est fixé.

7. Support de bielle de réaction selon l'une quelconque des revendications 1 à 5, le support de bielle de réaction (8) supportant un palier de montage (11) pour une bielle de réaction (7) dirigée vers l'avant depuis un essieu arrière (6) à suspension pneumatique, **caractérisé en ce que** le palier (11) et la surface de fixation (12, 13) sont tous deux situés en dessous d'un élément latéral longitudinal de cadre de châssis (3), qui fait partie du cadre de châssis et auquel le support de bielle de réaction (8) est fixé.
